# EUROPÄISCHE PATENTANMELDUNG

(11) **EP 1 164 405 A2**
(43) Veröffentlichungstag der Anmeldung: **19.12.2001**
(21) Anmeldenummer: 01113150.5
(22) Anmeldetag: 30.05.2001
(51) Int. Cl.: G02B 26/10

(54) **Verfahren und Vorrichtung zum generieren eines dreidimensionalen Objekts**

(30) Priorität: 05.06.2000 DE 10027323
(71) Anmelder: Leica Microsystems Heidelberg GmbH, 68165 Mannheim (DE)
(72) Erfinder: Knebel, Werner Dr., 76709 Kronau (DE); Hoffmann, Jürgen Dr., 65191 Wiesbaden (DE)
(74) Vertreter: Reichert, Werner F., Dr.

(57) **Zusammenfassung**

Die vorliegende Erfindung betrifft ein Verfahren zum Generieren eines dreidimensionalen Objekts (1) aus einer dreidimensionalen Objektvorlage (2), wobei die Objektvorlage (2) mit einem Lichtstrahl (3) einer Lichtquelle (4) abgetastet wird und das von der Objektvorlage (2) zurückkehrende Licht (5) detektiert wird. Die Objektvorlage (2) soll mit einer erhöhten Auflösung und Genauigkeit abtastbar sein, so dass ein Objekt (1) aus der Objektvorlage (2) weitgehend vorlagengetreu generiert werden kann. Das erfindungsgemäße Verfahren ist dadurch gekennzeichnet, dass die Abtastoptik (7 ,8, 9) konfokal arbeitet.

## Beschreibung

Die vorliegende Erfindung betrifft ein Verfahren und eine Vorrichtung zum Generieren eines dreidimensionalen Objekts aus einer dreidimensionalen Objektvorlage, wobei die Objektvorlage mit einem Lichtstrahl einer Lichtquelle abgetastet wird und das vom Objekt zurückkehrende Licht detektiert wird.

Verfahren der gattungsbildenden Art sind seit geraumer Zeit in der Praxis bekannt. Beispielsweise werden dreidimensionale Objektvorlagen von Hilfe der Musterprojektionsverfahren gemessen, so dass anhand der aufgenommenen Bilddaten ein dreidimensionales Objekt aus einer dreidimensionalen Objektvorlage generiert werden kann.

Bei dem Musterprojektionsverfahren wird die Objektvorlage beispielsweise mit einem Streifenmuster beleuchtet und das beleuchtete Objekt wird mit einer oder mit mehreren Kameras detektiert. Anhand rechnerischer Rekonstruktions- bzw. Auswerteverfahren kann auf die Form und somit auf die Raumkoordinaten der dreidimensionalen Objektvorlage geschlossen werden.

Die gattungsbildenden Verfahren sind jedoch hinsichtlich der Auflösung durch den Bildaufnahmevorgang beschränkt. Die erzielbare Auflösung ist abhängig von der Art, Feinheit und Güte des auf die dreidimensionale Objektvorlage projizierten Musters, dessen Orientierung, der Übertragungsfunktion der Abbildungsoptik sowie der Anzahl der aufgenommenen Objektvorlagebilder. Hinsichtlich der rechnerischen Auswerteverfahren bereitet insbesondere der große Tiefenschärfenbereich der abbildenden Optik große Probleme, da von den aufgenommenen projizierten zweidimensionalen Objektvorlagebildern die Raumkoordinaten der dreidimensionalen Objektvorlage mit hoher Genauigkeit auch in senkrechter Richtung zur Projektionsebene - also entlang der optischen Achse - extrahiert werden müssen.

Der vorliegenden Erfindung liegt daher die Aufgabe zugrunde, ein Verfahren zum Generieren eines dreidimensionalen Objekts anzugeben, mit dem eine Objektvorlage mit einer erhöhten Auflösung und Genauigkeit abgetastet wird, so dass ein Objekt aus der Objektvorlage weitgehend vorlagengetreu generiert werden kann.

Das erfindungsgemäße Verfahren löst die voranstehende Aufgabe durch die Merkmale des Patentanspruchs 1.

Weiterhin liegt der vorliegenden Erfindung die Aufgabe zugrunde, eine Vorrichtung zum Generieren eines dreidimensionalen Objekts anzugeben, die eine Objektvorlage mit einer erhöhten Auflösung und Genauigkeit abgetastet und ein Objekt aus der Objektvorlage weitgehend vorlagengetreu generiert.

Die Aufgabe wird durch eine Vorrichtung Gelöst, die dadurch gekennzeichnet ist, dass die Abtastoptik konfokal arbeitet.

Erfindungsgemäß ist zunächst erkannt worden, dass eine Auflösungsverbesserung beim Abtasten einer dreidimensionalen Objektvorlage durch eine konfokale Abbildung insbesondere in Richtung der optischen Achse erzielt werden kann. Hierbei wird im Gegensatz zu den Musterprojektionsverfahren, bei denen ein ausgedehntes zweidimensionales Muster auf die dreidimensionale Objektvorlage projiziert wird, das Objekt punktförmig mit einem fokussierten Lichtstrahl abgetastet. Gemäß dem konfokalen Prinzip wird lediglich die Intensität des vom Objekt zurückkehrenden Lichts dieser punktförmigen Beleuchtungsregion gemessen, Licht aus Bereichen außerhalb der Fokalebene der abbildenden Optik wird unterdrückt. Die dreidimensionalen Objektdaten werden durch das konfokale Abtasten der dreidimensionalen Objektvorlage gewonnen. Hierzu wird im allgemeinen der Beleuchtungspunkt in der Fokalebene der abbildenden Optik mäanderförmig über das Objekt bewegt, so dass hierdurch ein zweidimensionales Schnittbild des Objekts gemessen wird. Dieser Vorgang wird sukzessiv wiederholt, wobei der Objektabstand zur Abbildungsoptik jeweils verändert wird, so dass letztendlich eine Vielzahl zweidimensionaler Schnittbilder der dreidimensionalen Objektvorlage detektiert und abgespeichert werden.

In besonders vorteilhafter Weise kann durch das konfokale Abtasten der dreidimensionalen Objektvorlage die Auflösung nahezu beliebig erhöht werden. Hierzu wird die Abbildungsoptik derart konfiguriert, dass die dreidimensionale Ausdehnung des punktförmigen Beleuchtungsmusters entsprechend klein ist. Je kleiner das punktförmige Beleuchtungsmuster gewählt wird, desto größer ist die erzielbare Auflösung. Demgemäß ist das mäanderförmige Abtastmuster entsprechend fein zu wählen.

Das mit dem konfokalen Abtastvorgang erzielbare Auflösungsvermögen ist lediglich durch die numerische Apertur der Abbildungsoptik sowie der Wellenlänge des verwendeten Lichts begrenzt, da im Idealfall eine beugungsbegrenzte punktförmige Abbildung vorliegt. Insbesondere entlang der optischen Achse ist hierdurch eine erhöhte Auflösung gegeben, da - aufgrund des konfokalen Abbildungsprinzips - nur die im Fokus des Beleuchtungspunkts befindlichen Objektbereiche detektiert werden und die Bereiche außerhalb dieser Fokusregion unterdrückt werden. Insbesondere durch die Erhöhung der Auflösung entlang der optischen Achse - verglichen zu den zweidimensionalen Musterprojektionsverfahren - kann das Auflösungsvermögen bei der Detektion der Objektvorlage erhöht werden, wodurch in erfindungsgemäßer Weise eine nahezu optimale vorlagengetreue dreidimensionale Nachbildung aus der dreidimensionalen Objektvorlage möglich ist.

Eine konfokale Abbildung wird durch das Einfügen mindestens eines Beleuchtungs- und eines Detektionspinholes im optischen Strahlengang erzielt. Das Beleuchtungspinhole und das Detektionspinhole ist jeweils zum Objekt optisch konjugiert angeordnet. Das Beleuchtungspinhole stellt eine punktförmige Lichtquelle dar, das Detektionspinhole wirkt als punktförmiger Detektor.

Der Abtastvorgang wird von einer Steuereinrichtung gesteuert und der Lichtstrahl wird von einer Strahlablenkeinrichtung abgelenkt. Die Strahlablenkeinrichtung weist üblicherweise mindestens einen den Lichtstrahl ablenkenden, beweglich angeordneten Spiegel auf. Der aktuelle Zustand der Strahlablenkeinrichtung - also beispielsweise die Position des beweglich angeordneten Spiegels - wird der Steuereinrichtung übermittelt, so dass dieser die tatsächliche Strahlposition bzw. Abtastposition im zeitlichen Verlauf des Abtastvorgangs bekannt ist. Aufgrund dieser Zustandsdaten bzw. Positionsdaten wird ein einem Beleuchtungspunkt der Objektvorlage entsprechend gemessener Intensitätswert einem Bildpositionswert zugewiesen und im allgemeinen auf einem Datenträger gespeichert. Üblicherweise wird als Stellelement der Strahlablenkeinrichtung ein Galvanometer oder ein resonantes Galvanometer für jeden beweglich angeordneten Spiegel verwendet.

Bei dem von der Objektvorlage zurückkehrenden Licht könnte es sich um reflektiertes Licht und/oder um Streulicht und/oder um Fluoreszenzlicht handeln. Demgemäß sind im optischen Strahlengang entsprechende Filter angeordnet, die beispielsweise im Fall der Fluoreszenzlichtdetektion vor allem das an der Objektvorlage reflektierte Anregungslicht mit Hilfe eines wellenlängenselektiven (dichroitischen) Strahlteilers aus dem Detektionsstrahlengang ausblendet bzw. unterdrückt, so dass nur das Fluoreszenzlicht detektiert wird.

In einem konkreten Verfahrensschritt ist vorgesehen, dass die detektierten Objektvorlagedaten mit Hilfe von Bildverarbeitungsalgorithmen verarbeitet werden. Diese Verarbeitung könnte mit Hilfe eines Computers erfolgen. Als Bildverarbeitungsalgorithmen kommen vorzugsweise Methoden der Objektsegmentierung, Oberflächenrendering und/oder Oberflächenglättung in Frage. Zunächst ist eine Segmentierung der nachzubildenden dreidimensionalen Objektvorlage aus dem detektierten dreidimensionalen Bilddatensatz vorgesehen. Weiterhin wird eine Berechnung der Oberfläche (Oberflächenrendering) der segmentierten dreidimensionalen Objektvorlage durchgeführt. Die so bestimmte Oberfläche kann bei Bedarf mit einem entsprechenden Glättungsalgorithmus weiterverarbeitet werden, um beispielsweise die bei der Oberflächenbestimmung aufgetretenen Berechnungsartefakte auszugleichen.

Nun ist es möglich, die verarbeiteten Objektvorlagedaten der Vorrichtung zur Objektgenerierung zu übermitteln, mit Hilfe derer das dreidimensionale Objekt generiert wird. Alternativ hierzu könnten auch die detektierten Objektvorlagedaten - ohne Anwendung von Bildverarbeitungsalgorithmen - der Vorrichtung zur Objektgenerierung direkt übermittelt werden. In diesem Fall müssen sich die notwendigen Daten zum Generieren des dreidimensionalen Objekts direkt aus dem detektierten Bilddatensatz ergeben.

Im konkreten ist vorgesehen, dass das generierte Objekt maßstabsgetreu zur abgetasteten Objektvorlage ist. Bei einer konfokalen Abbildung ist im allgemeinen das Auflösungsvermögen entlang der optischen Achse unterschiedlich zum Auflösungsvermögen senkrecht - also in der Fokalebene - dazu. Somit weisen die detektierten Objektbilddaten eine dem Auflösungsvermögen entsprechende und in Abhängigkeit der Raumrichtung unterschiedliche Ausdehnung bzw. Pixelgröße auf. Dieser Tatsache ist in verfahrensmäßiger Hinsicht Rechnung zu tragen, wozu die detektierten bzw. verarbeiteten Objektvorlagedaten entsprechend skaliert werden. Für viele Anwendungen ist vorgesehen, dass das generierte Objekt größer als die Objektvorlage ist, eine Verkleinerung der abgetasteten Objektvorlage ist ebenfalls denkbar. In einer konkreten Anwendung weist der Maßstab den Wert 1 auf, d.h. das generierte Objekt hat die gleiche Größe wie die abgetastete Objektvorlage.

Insbesondere bei makroskopischen Objektvorlagen kann es erforderlich sein, die Objektvorlage aus unterschiedlichen Richtungen abzutasten. Dies ist vor allem dann notwendig, wenn es sich bei der Objektvorlage um ein nicht transparentes dreidimensionales Objekt handelt. In diesem Fall kann mit dem konfokalen Prinzip lediglich der der Abtastoptik zugewandte Oberflächenteil der Objektvorlage abgetastet werden, so dass lediglich davon Oberflächeninformationen extrahiert werden können. Der Teil der Oberfläche der Objektvorlage, der der Abtastoptik abgewandt ist, kann kein Oberflächensignal liefern, da der Lichtstrahl zu diesem Teil der Objektvorlage nicht vordringen kann. Nun könnte die Objektvorlage analog zu tomographischen Abbildungsverfahren relativ zur Abtastoptik um mindestens eine Achse gedreht werden. Hierbei ist es zweckmäßig, das Objekt oder die Abtastoptik jeweils um das gleiche Winkelinkrement zu drehen. Alternativ hierzu könnte die Objektvorlage gleichzeitig aus unterschiedlichen Richtungen mit mehreren Abtastvorrichtungen detektiert werden.

In ganz besonders bevorzugter Weise erfolgt die Abtastung von Objektvorlagen mikroskopischer Größenordnungen mit einem konfokalen Rastermikroskop. Hierbei sind als mögliche Objektvorlagen alle Objekte denkbar, die üblicherweise mit einem konfokalen Rastermikroskop detektiert werden. Dies umfaßt insbesondere biologische Objekte, die im allgemeinen zumindest teilweise transparent sind.

Es ist vorgesehen, dass die Objektgenerierung im wesentlichen durch spanende oder durch spanlose Formung erfolgt. Weiterhin könnte die Objektgenerierung im wesentlichen mit Methoden der Laserstrahllithographie erfolgen. Dabei könnte der Laserstrahl des Laserstrahllithographen eine mit Laserlicht aushärtbare Polymer-Flüssigkeit belichten. Die Belichtung der aushärtbaren Polymer-Flüssigkeit könnte analog zum Abtastvorgang der Objektvorlage erfolgen. Zunächst wird ein abgetastetes zweidimensionales Schnittbild der Objektvorlage mit dem Laserstrahllithographen belichtet, bevor das nächste abgetastete Schnittbild mit dem Laserstrahllithographen belichtet wird. Auch die Optik des Laserstrahllithographen könnte hierbei konfokal arbeiten. Ganz allgemein könnten zur Objektgenerierung Rapid-Prototyping-Verfahren eingesetzt werden.

In bevorzugter Weise erfolgt die Objektgenerierung nahezu zeitgleich mit der Abtastung der Objektvorlage. Somit könnte direkt nach dem Abtastvorgang der Objektvorlage das zu generierende dreidimensionale Objekt vorliegen, nachdem nahezu simultan die Objektvorlage abgetastet und das dreidimensionale Objekt mit dem Laserstrahllithographen belichtet wurde.
In besonders vorteilhafter Weise kann das generierte Objekt aus verschiedenen Materialien bestehen. Beispielsweise könnte der Laserstrahllithograph eine Mischung von unterschiedlichen Polymer-Flüssigkeiten mit Laserlicht unterschiedlicher Wellenlängen belichten. Hierbei vermag das Laserlicht der einen Wellenlänge nur eine Polymer-Flüssigkeit wirksam auszuhärten, das Laserlicht der anderen Wellenlänge hingegen belichtet und härtet nur die andere Polymer-Flüssigkeit aus. Dementsprechend könnte das generierte Objekt aus verschiedenen polymeren Materialien generiert werden.

In ganz besonders vorteilhafter Weise weist das generierte Objekt transparente und/oder teiltransparente Materialien bzw. Objektbereiche auf. Insbesondere transparente Objektbereiche biologischer Objekte, die mit einem konfokalen Rastermikroskop detektiert werden, können so vorlagengetreu ebenfalls transparent nachgebildet werden. Eine teiltransparente Generierung des Objekts ist ebenfalls denkbar. Zur Realisierung unterschiedlicher Transparenzgrade könnte eine entsprechende Polymer-Flüssigkeit in Verbindung mit dem Laserstrahllithographen verwendet werden, die in Abhängigkeit der Belichtungszeitdauer ein ausgehärtetes Material unterschiedlichen Transparenzgrades erzeugt. Dieses generierte dreidimensionale Objekt ist nunmehr eine maßstabs-, ggf. farb- und transparenzgetreue Nachbildung der mikroskopischen Objektvorlage. Insbesondere zu Forschungs- oder Ausbildungszwecken kann der Wissenschaftler oder der Student die tatsächliche räumliche Gestalt des Objekts sowie die Anordnung einzelner Objektbereiche zueinander in vorteilhafter Weise anhand des generierten Objekts direkt untersuchen, ohne sich (pseudo)-dreidimensionaler Darstellungen des Objekts am Computermonitor ggf. mit Stereobrille oder ähnlichen Hilfsmitteln in umständlicher Weise zu bedienen.

Insbesondere in Verbindung mit der konfokalen Fluoreszenz-Rastermikroskopie biologischer Objektvorlagen wird das generierte Objekt verschiedenfarbig erzeugt. Beispielsweise kann ein mit drei unterschiedlichen Fluoreszenzfarbstoffen markiertes Objekt in den Farben nachgebildet werden, die der charakteristischen Wellenlänge der Fluoreszenzemission des jeweiligen Fluoreszenzfarbstoffs entspricht. Auch in diesem Fall könnten mit Hilfe eines Laserstrahllithographen eine entsprechende Mischung von Polymer-Flüssigkeiten mit Laserlicht unterschiedlicher Wellenlängen belichtet werden. Darüber hinaus könnte das generierte Objekt selbst mit fluoreszierenden und/oder phosphoreszierenden Materialien versehen sein.

Ganz allgemein ist vorgesehen, dass das generierte Objekt aus verschiedenen Materialien generiert wird und/oder die Materialien eine unterschiedliche Transparenz und/oder eine unterschiedliche Farbe aufweisen. Die Gestaltung des Objekts kann hierbei in Abhängigkeit des Intensitätswerts und/oder der Wellenlänge und/oder der Polarisation des detektierten Objektvorlagelichts erfolgen. Beispielsweise ist denkbar, dass in Abhängigkeit des Intensitätswerts des detektierten Objektvorlagelichts die Transparenz des Materials des generierten Objekts entsprechend ausgeführt ist. Weiterhin könnte die Wellenlänge des detektierten Objektvorlagelichts einer entsprechenden Farbe des zu generierenden Objekts entsprechen. Es ist vorgesehen, dass die Zuordnungsvorschrift von der Eigenschaft des detektierten Objektvorlagelichts zu der Eigenschaft der generierten Objektmaterialausführung von einem Benutzer vorgebbar ist.

Das erfindungsgemäße Verfahren könnte des weiteren zur Darstellung dynamischer Prozesse von Bereichen der Objektvorlage dienen. Hierzu kann eine Objektlinie zu unterschiedlichen Zeiten detektiert werden. Die detektierten Objektlinien, d.h. eine Linie der Objektvorlage, werden dann zu einem Oberflächenobjekt zusammengesetzt. Die Darstellung dynamischer Prozesse einer Objektebene, d.h. eine Ebene der Objektvorlage, ist in gleicher Weise denkbar. Hierbei wird eine Objektebene bzw. eine Schnittebene der Objektvorlage zu unterschiedlichen Zeiten detektiert und die so erhaltene Zeitserie wird zu einem dreidimensionalen Objekt zusammengesetzt. Bei beiden Darstellungsformen entspricht eine Raumachse der Zeitachse des dynamischen Prozesses.

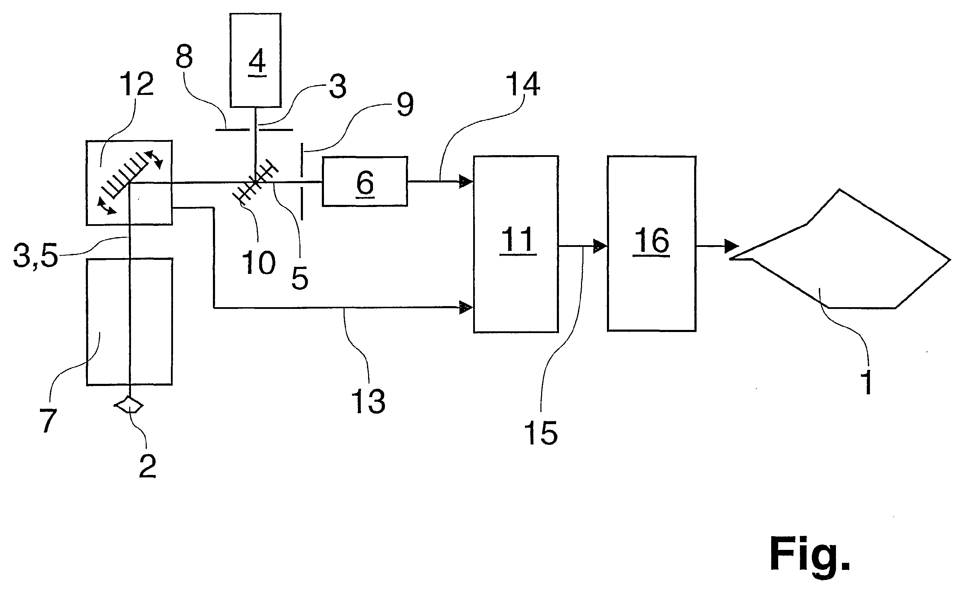

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigt die einzige
- Fig.: eine schematische Darstellung eines konfokalen Rastermikroskops zur Durchführung des erfindungsgemäßen Verfahrens.

Die Fig. zeigt ein konfokales Fluoreszenz-Rastermikroskop zur Durchführung des Verfahrens zum Generieren eines dreidimensionalen Objekts 1 aus einer dreidimensionalen Objektvorlage 2. Die Objektvorlage 2 wird mit einem Lichtstrahl 3 einer Lichtquelle 4 abgestastet. Das von der Objektvorlage 2 zurückkehrende Fluoreszenzlicht 5 wird mit dem Detektor 6 detektiert.

Erfindungsgemäß arbeitet die Abtastoptik 7, 8 und 9 konfokal. Hierzu ist ein Beleuchtungspinhole 8 im Beleuchtungsstrahlengang der Lichtquelle 4 optisch konjugiert zur objektvorlageseitigen Fokalebene des Mikroskopobjektivs 7 der Abtastoptik angeordnet. Ebenfalls optisch konjugiert zur objektvorlageseitigen Fokalebene des Mikroskopobjektivs 7 ist das Detektionspinhole 9 angeordnet. Das von der Objektvorlage 2 reflektierte Beleuchtungslicht 3 wird von dem von der Objektvorlage 2 zurückkommenden Fluoreszenlicht 5 mit Hilfe eines dichroitischen Strahlteilers 10 derart getrennt, dass lediglich das Fluoreszenzlicht 5 den dichroitischen Strahlteiler 10 passieren kann und von dem Detektor 6 detektiert wird.

Der Abtastvorgang wird von einer Steuereinrichtung 11 gesteuert. Der Lichtstrahl 3 bzw. 5 wird von einer Strahlablenkeinrichtung 12 abgelenkt. Bei der Strahlablenkeinrichtung handelt es sich um einen kardanisch angeordneten Spiegel, der den Lichtstrahl 3 bzw. 5 in einer Richtung sinusförmig und in einer dazu orthogonalen Richtung sägezahnförmig ablenkt, so dass sich eine mäanderförmige Objektvorlageabtastung in der Fokalebene des Mikroskopobjektivs 7 ergibt.

Der aktuelle Zustand der Strahlablenkeinrichtung 12, also die momentane räumliche Lage des Spiegels, wird der Steuereinrichtung 11 übermittelt. Somit ist der zeitlichen Verlauf der tatsächlichen Strahlposition während des Abtastvorgangs der Steuereinrichtung 11 bekannt. Die Strahlpositionsdaten 13 wie auch das vom Detektor 6 detektierte Signal 14 wird der Steuereinrichtung 11 in analoger Form übermittelt und wird von der Steuereinrichtung 11 digitalisiert.

Bei der Objektvorlage 2 handelt es sich um ein mit zwei verschiedenen Fluoreszenzfarbstoffen spezifisch markiertes biologisches Objekt. Das von der Objektvorlage 2 zurückkehrende Licht 5 ist demgemäß Fluoreszenzlicht.

Die detektierten Objektvorlagedaten 14 werden von der Steuereinrichtung 11 mit Hilfe von Bildverarbeitungsalgorithmen verarbeitet. Zunächst wird der detektierte dreidimensionale Objektvorlagendatensatz segmentiert. Hierdurch ergeben sich zwei Klassen von Objekten, einerseits die Objekte, die mit dem einen Fluoreszenzfarbstoff, andererseits die Objekte, die mit dem anderen Fluoreszenzfarbstoff spezifisch markiert sind. Von den segmentierten Objekten werden sodann mit einem weiteren Bildverarbeitungsalgorithmus die Oberflächen bestimmt (Oberflächenrendering). Die verarbeiteten Objektvorlagedaten 15 werden an die Vorrichtung zur Objektgenerierung 16 übermittelt.

Die Vorrichtung zur Objektgenerierung 16 generiert das Objekt 1 maßstabsgetreu aus der abgetasteten Objektvorlage 2. Es weist eine 200fache Vergrößerung der Objektvorlage auf, was in der Fig. jedoch nicht maßstabsgetreu dargestellt ist.

Die Objektgenerierung erfolgt mit Methoden der Laserstrahllithographie.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

### Bezugszeichenliste

- 1: generiertes Objekt
- 2: Objektvorlage
- 3: Lichtstrahl
- 4: Lichtquelle
- 5: das von (2) zurückkehrende Licht
- 6: Detektor
- 7: Abtastoptik
- 8: Beleuchtungspinhole
- 9: Detektionspinhole
- 10: dichroitischer Strahlteiler
- 11: Steuereinrichtung
- 12: Strahlablenkeinrichtung
- 13: Strahlpositionsdaten
- 14: detektierte Lichtintensität
- 15: verarbeitete Objektvorlagedaten
- 16: Vorrichtung zur Objektgenerierung

## Patentansprüche

1. Verfahren zum Generieren eines dreidimensionalen Objekts (1) **gekennzeichnet durch** folgende Schritte:
• Abtasten einer dreidimensionalen Objektvorlage (2) mit einem Lichtstrahl (3) einer Lichtquelle (4), wobei die Abtastoptik (7, 8, 9) konfokal arbeitet,
• Detektieren des von der Objektvorlage (2) zurückkehrenden Lichts,
• Erzeugen von Objektvorlagedaten (14) aus dem detektierten Licht und
• Übermitteln der Objektvorlagedaten (14) an eine Vorrichtung zur Objektgenerierung (16).

2. Verfahren nach Anspruch 1, **dadurch gekennzeichnet, dass** die Abtastoptik (7, 8, 9) mindestens ein Beleuchtungs- (8) und ein Detektionspinhole (9) aufweist.

3. Verfahren nach Anspruch 1 oder 2, **dadurch gekennzeichnet, dass** der Abtastvorgang von einer Steuereinrichtung (11) gesteuert und der Lichtstrahl (3, 5) von einer Strahlablenkeinrichtung (12) abgelenkt wird.

4. Verfahren nach einem der Ansprüche von 1 bis 3, **dadurch gekennzeichnet, dass** es sich bei dem von der Objektvorlage (2) zurückkehrenden Licht (5) um reflektiertes Licht und/oder um Streulicht und/oder um Fluoreszenzlicht handelt.

5. Verfahren nach einem der Ansprüche von 1 bis 4, **dadurch gekennzeichnet, dass** die Abtastung der Objektvorlage (2) mit einem konfokalen Rastermikroskop erfolgt.

6. Verfahren nach einem der Ansprüche von 1 bis 5, **dadurch gekennzeichnet, dass** die Objektgenerierung im wesentlichen durch spanende Formung erfolgt.

7. Verfahren nach einem der Ansprüche von 1 bis 5, **dadurch gekennzeichnet, dass** die Objektgenerierung im wesentlichen mit Methoden der Laserstrahllithographie erfolgt.

8. Verfahren nach Anspruch 7, **dadurch gekennzeichnet, dass** Rapid-Prototyping-Verfahren zur Objektgenerierung eingesetzt werden.

9. Verfahren nach Anspruch 1, **dadurch gekennzeichnet, dass** in Abhängigkeit des Intensitätswerts und/oder der Wellenlänge und/oder der Polarisation des detektierten Objektvorlagelichts (5) das generierte Objekt (1) aus verschiedenen Materialien generiert wird und/oder die Materialien eine unterschiedliche Transparenz und/oder eine unterschiedliche Farbe aufweisen.

10. Verfahren nach einem der Ansprüche 1 bis 9, **dadurch gekennzeichnet, dass** zur Darstellung dynamischer Prozesse einer Objektebene die zu unterschiedlichen Zeiten detektierten Objektebenen zu einem dreidimensionalen Objekt zusammengesetzt werden.

11. Vorrichtung zum Generieren eines dreidimensionalen Objekts mit einer Abtastoptik (7, 8, 9) zum Abtasten einer dreidimensionalen Objektvorlage (2), mit einen Detektor zum Detektieren des von der Objektvorlage (2) zurückkehrenden Lichts und mit einer Vorrichtung zur Objektgenerierung, **dadurch gekennzeichnet, dass** die Abtastoptik (7, 8, 9) konfokal arbeitet.

12. Vorrichtung nach Anspruch 11, **dadurch gekennzeichnet, dass** die Abtastoptik (7, 8, 9) mindestens ein Beleuchtungs- (8) und ein Detektionspinhole (9) aufweist.

13. Vorrichtung nach Anspruch 11, **dadurch gekennzeichnet, dass** die Abtastoptik (7, 8, 9) eine Steuereinrichtung (11) umfasst, die eine Strahlablenkeinrichtung (12) steuert.

14. Vorrichtung nach Anspruch 11, **dadurch gekennzeichnet, dass** die Abtastoptik (7, 8, 9) ein konfokales Rastermikroskop ist.

15. Vorrichtung nach Anspruch 11, **dadurch gekennzeichnet, dass** die Vorrichtung zur Objektgenerierung ein Laserstrahllithograph ist.
